# EUROPEAN PATENT SPECIFICATION

(11) **EP 0 745 927 B1**
(45) Date of publication and mention of the grant of the patent: **24.11.1999**
(21) Application number: 96303163.8
(22) Date of filing: 03.05.1996
(51) Int. Cl.: G06F 3/033, G06F 9/44

(54) **Method of and editing system for setting tool button**
Methode und Editiersystem zur Stellung einer Werkzeugtaste
Méthode et système d'édition pour fixer un bouton d'outil

(30) Priority: 31.05.1995 JP 13374395
(43) Date of publication of application: 04.12.1996
(73) Proprietor: International Business Machines Corporation, Armonk, N.Y. 10504 (US)
(72) Inventor: Kitayama, Fumihiko, Aoba-ku, Yokohama-shi, Kanagawa-ken (JP); Kuse, Kazushi, Fujisawa-shi, Kanagawa-ken (JP)
(74) Representative: Williams, Julian David

(56) References cited:
- EP-A- 0 542 660
- "Lotus 1.2.3, Spreadsheet for Windows, Release 5, User's Guide" 1994 , LOTUS DEVELOPMENT CORPORATION , USA, PAGES 253-279 XP002041583 * page 256 - page 258 * * page 262 - page 265 *
- IBM TECHNICAL DISCLOSURE BULLETIN, vol. 35, no. 2, 1 July 1992, pages 171-172, XP000313257 "DYNAMICALLY ADDING ITEMS TO PRE-EXISTING OR BUILD-YOUR-OWN TOOL PALETTES"

## Description

The present invention relates to a method and system for setting tool buttons, and more particularly, to a method and system in which tool buttons can be arbitrarily set with user's operation.

In various application programs using a computer, there is an increasing number of application programs having a high function user interface where users can graphically display an object being edited and can operate the object directly so that it can be easily edited and processed. In particular, in the application programs with a graphic edit function, there is a high demand for the high function of the user interface. This is because there are a large number of physical operations that a user has to execute to generate a graphic object.

However, in order for a user to make an editing object such as a graphic object, it is necessary to specify at least commands and parameters of an editing object. Command as used herein means a standard command that a system executes. More specifically, there are commands for generation of a graphic object, change of a graphic object, and synthesis of graphic objects. Also, the parameters of an editing object are referred to parameters representative of the kind (for example, circle or rectangle), color, line kind, line width, and existence of hatching of an object to be generated. When a circle of a thin line is made with a solid line, a user needs to specify a command for "generation of a circle" and also specify parameters for "solid line" and "thin line."

For a conventional user's interface, there is a method of providing fixed tool buttons which cannot be changed. This is a method in which a limited plurality of unchangeable tool buttons are provided in advance to realize a user's interface where the amount that a user operates the tool buttons is reduced. In this method the user's interface can be realized relatively simply, but in application programs which are used in different ways, it cannot be said that they are convenient for all users. This is because there are some cases where a function a user uses many times is not so often needed by other users. Also, a system itself has the limitation that users cannot freely change the settings of a tool button. In particular, in application programs where various parameters of various editing objects have to be specified in addition to specification of commands, this conventional interface is not always friendly to users.

Also, even in the user interface where tool buttons can be freely changed to some degree, there has so far existed no user interface where the parameters of an editing object are objects to be customized and can be easily customized visually.

Customizable buttons are disclosed in chapter 23 and 24 of the Lotus 123 Spreadsheet for Windows, Release 5 User's Guide. Lotus and 123 are trademarks of Lotus Development Corporation. Buttons may be edited and associated with macros using the Lotus 123 macro language. To assign a macro to a button one has to first record the macro, open a transcript window, select the macro code in the window and choose the 'Transcript Make Button' from the pull down options. In theory one could record a macro by creating an object such as a line having certain properties such as chart type and data ranges and then assign the macro to a button as described. However such a procedure for associating a macro with a button requires some knowledge of the macro language and a detailed knowledge if one is to edit the parameters used in the macro. A problem of this prior art is that knowledge of macro language is required to programme a button.

Thus, in application programs where various parameters of various editing objects have to be specified in addition to specification of commands, the conventional tool buttons are not always easy to use. Accordingly, it would be desirable to make it possible to set both a command and each parameter of an editing object to a tool button by directly operating the object being displayed on the screen. Also, it would be desirable to provide tool buttons which users can easily customize visually. Further, it would be desirable to provide flexible tool buttons where the commands and the parameters of an editing object, set in some tool button, can be easily reset visually.

In accordance with the present invention, there is provided a method of selectively setting a GUI tool button for executing an object command, comprising the steps of specifying an object command for an object and specifying parameters of said object; generating on a display screen a graphical representation of the object based on said specified command and said specified parameters; specifying a tool button, displayed on said display screen with a graphical representation distinguished from the graphical representation of said object; selecting said object displayed on said display screen, so that said selected object is related to said tool button; copying the specified command and the specified parameters of said object to the related tool button whereby subsequent selection of the tool button will cause execution of the specified command according to said specified parameters.

Preferred embodiments of the present invention may further comprise the step of changing a display form of the tool button displayed on the display screen to a display form corresponding to the parameters that are set.

The editing object and the tool button can be related by moving a pointer around on the display with a pointing device and performing a drag operation.

Viewing the present invention from another aspect, there is provided an editing system for selectively setting a GUI tool button for executing an object command comprising: means for specifying an object command for an object and specifying parameters of said object; means for generating on a display screen a graphical representation of the object based on said specified command and said specified parameters; means for specifying a tool button displayed on said display screen with a graphical representation distinguished from the graphical representation of said object; means for selecting said object displayed on said display screen so that said selected object is related to said tool button; means for copying the specified command and the specified parameters of said object to the related tool button whereby subsequent selection of the tool button will cause execution of the specified command according to said specified parameters.

The editing system may further comprise means for changing a display form of the tool button displayed on said display screen to a display form corresponding to said command and data on said parameter stored in said operation storage means.

A preferred embodiment of the present invention will now be described with reference to the accompanying drawings in which:
Figure 1 is a block diagram showing a system constructed according to an embodiment of the present invention;
Figure 2 is a flowchart showing the editing procedure of the embodiment;
Figure 3 illustrates an example of an edited window being displayed on the screen;
Figure 4 illustrates the different display forms of a tool button for a rectangle where different parameters have been set;
Figure 5 illustrates a case where the set content of one tool button is copied to another tool button; and
Figure 6 illustrates a case where the parameter that was set in a tool button is changed.

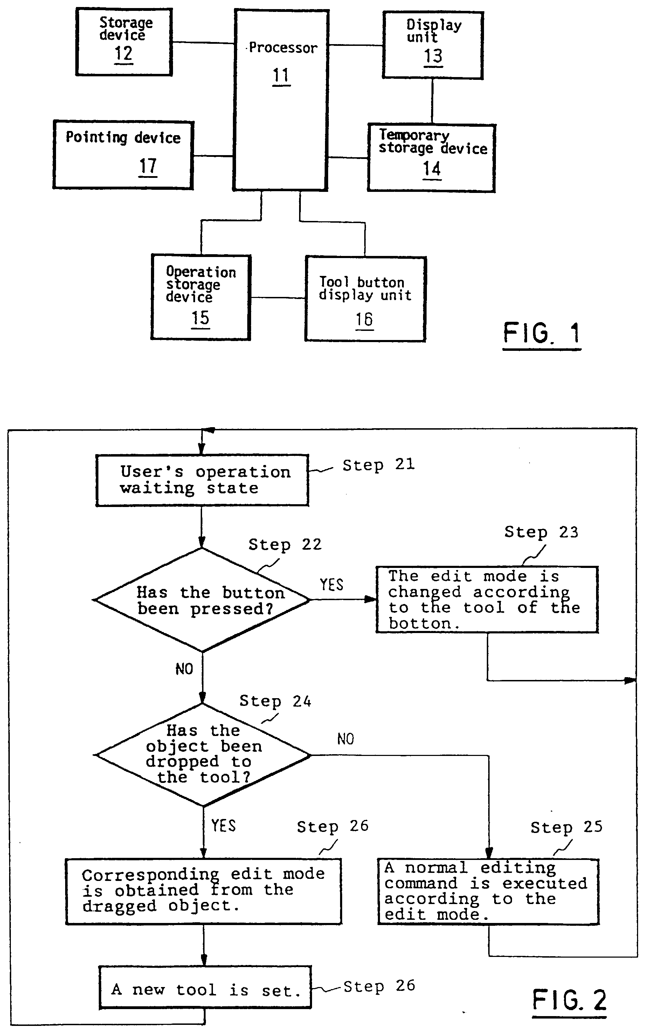

Figure 1 is a block diagram showing a system embodying the present invention. A processor 11 controls the execution of processing programs for performing the generation and editing of a graphic object. To the processor 11 there are connected a storage device 12, a display unit 13, a temporary storage device 14, an operation storage device 15, and a tool button display unit 16. An edit operation and tool button definition operation by a user are performed with a pointing device 17.

The storage device 12 stores the processing programs for executing the generation and editing of a graphic object. The display unit 13 displays a graphic object, which is generated with a predetermined command and is an editing object having a plurality of parameters. The display unit 13 also displays a plurality of tool buttons. Further, a pointer, which can be moved and specified with the pointing device 17, is displayed on the display unit 13. The temporary storage device 14 is a device for temporarily storing data being displayed, such as data on a graphical object. The operation storage device 15 stores commands and desired parameters of an editing object, when a user sets the content of a tool button. When both of the editing object and the tool button are specified with the pointing device 17, the processor 11 obtains the command with which the editing object was generated and also obtains the data on desired parameters of the editing object, and writes the command and the data on desired parameters, which have been stored in the operation storage device 15, so that they are related. Further, the tool button display device 16 changes the display form of a tool button which is displayed on the screen, according to the edit mode stored in the operation storage device 15.

Figure 2 is a flowchart showing the editing procedure in the embodiment of the present invention. A description will be made of a case where some edit mode has been set in the tool button and where the editing procedure is started from the user's operation waiting state (step 21). Note that the data on this edit mode has been stored in the operation storage device 15 but does not need to be set initially. A user generates a desired graphic object by inputting a command, specifying it, and specifying parameters of an editing object.

In the process of this editing, it is decided if the tool button being displayed on the screen of the display unit 13 has been clicked with the pointer (step 22). When the tool button is clicked, the edit mode of an editing system is changed according to the edit mode which was set in that tool button (step 23). Thereafter, step 23 returns to the user's operation waiting state (step 21).

When the tool button has not been clicked, it is decided if the editing object being displayed on the screen has been dropped to the tool button (step 24). This is usually done by specifying a predetermined area on the display screen with the pointing device 17, specifying an editing object contained in that area, and dropping the specified object to a tool button with a drag operation. In this case, the command on the editing object and the data on the parameters of the object are stored in the temporary storage device 14. With a drop operation to a desired tool button, these are related to the tool button. When the drop operation to a desired tool button is not performed, a desired command is executed with a desired parameter, according to the edit mode at that time and the user's operation performed (step 25). Thereafter, step 25 returns to the user's operation waiting state (step 21).

When the drop operation is performed, corresponding predetermined data is extracted by the processor 11 from the specified editing object (step 26). More specifically, this is attained by extracting by the processor 11 the information on a command and the data on the parameter of an editing object, from the graphic object specified by a user. The command used herein means a standard command that a system executes, and more specifically, there are commands for generation of a graphic object, change of a graphic object, and synthesis of graphic objects. The parameters of an editing object are referred to parameters representative of the kind (for example, circle or rectangle), color, line kind, line width, and existence of hatching of an object to be generated. These predetermined data are stored in the operation storage means 15.

Based on the data obtained, a new tool is obtained (step 27). In this case, the screen display of the tool button is changed to a display form corresponding to the data that has been set. This is for making it possible for a user to easily recognize the content set in the tool button visually. This point will be further described later. A change in the display of this tool button is performed by the tool button display unit 16. After this tool button is obtained, step 26 returns to the user's operation waiting state (step 21).

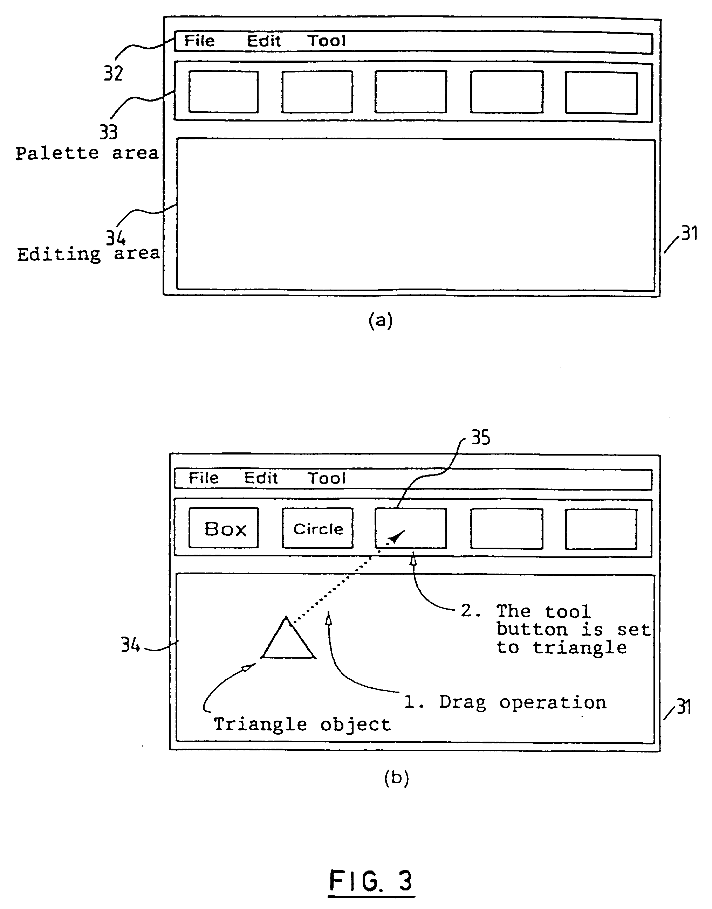

A setting method of the tool button will hereinafter be described giving the setting of a graphic object as an example. In Figure 3 there is shown an example of the editing window displayed on the screen. On a display screen 31 there are displayed a menu bar 32, a palette area 33 with a plurality of tool buttons, and an editing area 34 (Figure 3(a)). First, an editing object is generated in the editing area 34. More specifically, a command for "generation of Triangle" is selected from the menu of the "Edit" of the menu bar 32. In the case of this example, the "Triangle" in the pull-down menu (not shown) is selected. And, parameters representative of a line width, a line kind, and an existence of hatching are specified to generate a triangle of predetermined size at a predetermined place on the editing area 34.

After a triangle is selected as an editing object with the pointing device, the triangle is related to the tool button 35 in the palette area 33 with a drag operation. In this tool button 35 there are set the command for "generation of Triangle" and the specified parameters for a line width and a line kind (Figure 3(b)).

And, the display form of the tool button 35 is changed from the state where nothing has been displayed to the state where "Triangle" is displayed. If this setting is completed, thereafter a user will be able to generate a triangle having the set parameters at any time by clicking the tool button 35, as is a conventional tool button.

Note that for parameters to be set in a tool button, all of a plurality of parameters, which an editing object has, may be set, or only some of them may be set. For example, in the case of the triangle described above, parameters representative of the line width and line kind of an editing object are set, but a parameter representative of an existence of hatching does not always need to be set in a tool button. Further, as to which parameter is set in a tool button, parameters may arbitrarily be set from a setting menu by a user. If done in this manner, user's edit efficiency will be further enhanced.

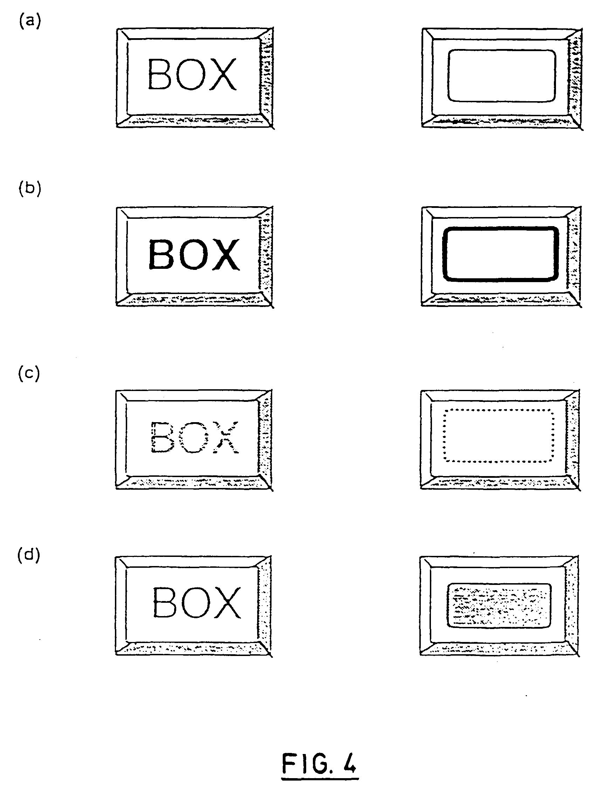

It is preferable that the display form of a tool button be changed according to the content of a parameter that is set. Figure 4 illustrates the different display forms of a tool button for a rectangle where different parameters have been set. Figure 4(a) illustrates a case where "normal" has been set for a line width, Figure 4(b) a case where "bold" has been set for a line width, Figure 4(c) a case where "broken line" has been set for a line kind, and Figure 4(d) a case where a rectangle has been hatched. Thus, the display form of the tool button is changed according to a parameter that is set, so a user can easily recognize the content of the setting visually. As a result, an interface, which is friendly to users, can be realized.

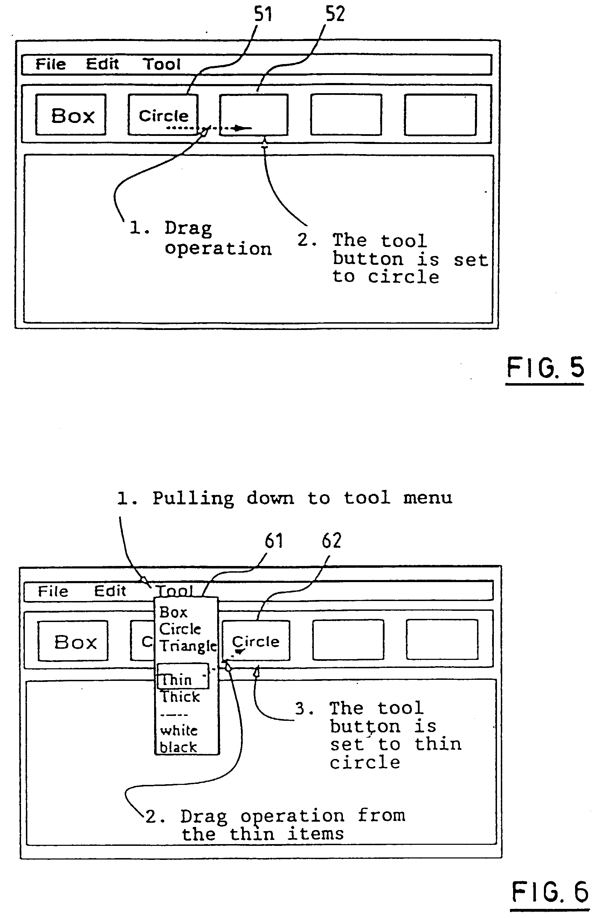

Further, the content of the setting of a tool button can be easily changed by a method such as will be described below. Figure 5 illustrates a case where the set content of one tool button is copied to another tool button. Since in this case a tool button 51 for generating a circle has been set, it can be easily copied with a drag operation to a tool button 51 where nothing has been set. In this manner, another tool button having the same function can be set easily.

Figure 6 shows a case where the parameter that was set in a tool button is changed. In this case, a pull-down menu 61 will be displayed if "Tool" is selected from a menu bar. Next, "Thin" 62 is related with the drag operation to a tool button 63 which has already been set. Then, the parameter for a line width, which has been set in this tool button, is changed to a thin line. In this manner, by pointing other parameter being displayed on the display screen with a pointing device and relating the other parameter to the above-described tool button, the parameter set in the above- described tool button can be easily changed to other parameter.

As has been described hereinbefore, in the present invention, a user can directly operate an editing object being displayed on the screen so that both of a command and each parameter of the editing object can be set to a tool button. In addition, the user can easily customize the tool button visually. Moreover, since the command set in the tool button and the parameter of the editing object can be easily reset visually, a flexible user's interface can be provided.

## Claims

1. A method of selectively setting a GUI tool button for executing an object command, comprising the steps of:
specifying an object command for an object and specifying parameters of said object;
generating on a display screen a graphical representation of the object based on said specified command and said specified parameters;
characterised by
specifying a tool button, displayed on said display screen with a graphical representation distinguished from the graphical representation of said object;
selecting said object displayed on said display screen and relating the selected object to said tool button;
copying the specified command and the specified parameters of said object to the related tool button whereby subsequent selection of the tool button will cause execution of the specified command according to said specified parameters.

2. The method as set forth in Claim 1 wherein said parameters set in said tool button can be changed by specifying other parameters displayed on said display screen so that said other parameters are related to said tool button.

3. The method as set forth in Claim 1 or 2 wherein at least one predetermined parameter of said parameters that said object has is set to said tool button.

4. The method as set forth in Claim 3, wherein said parameter, which is set to said tool button, can be set by the user.

5. The method as set forth in claims 1, 2, 3 or 4 whereby displaying said tool button in a first form before copying the specified command and in a second form after it is so copied.

6. An editing system for selectively setting a GUI tool button for executing an object command comprising:
means for specifying an object command for an object and specifying parameters of said object;
means for generating on a display screen a graphical representation of the object based on said specified command and said specified parameters;
characterised by
means for specifying a tool button displayed on said display screen with a graphical representation distinguished from the graphical representation of said object;
means for selecting said object displayed on said display screen and relating said selected object to said tool button;
means for copying the specified command and the specified parameters of said object to the related tool button whereby subsequent selection of the tool button will cause execution of the specified command according to said specified parameters.

7. The editing system as set forth in Claim 6 further comprising means for changing said parameters set in said tool button by specifying other parameters displayed on said display screen so that said other parameters are related to said tool button.

8. The editing system as set forth in Claim 6 or 7 wherein at least one predetermined parameter of said parameters that said object has is set to said tool button.

9. The editing system as set forth in Claim 8, wherein said parameter, which is set to said tool button, can be set by the user.

10. The editing system as set forth in claims 6,7,8 or 9 further comprising means for displaying said tool button in a first form before copying the specified command and means for displaying in a second form after it is so copied.

## Patentansprüche

1. Verfahren zum selektiven Setzen der Funktionsschaltfläche einer grafischen Benutzeroberfläche (GUI) zum Ausführen eines Objektbefehls, das die folgenden Schritte umfasst:
Festlegen eines Objektbefehls für ein Objekt und Festlegen von Parametern des Objektes;
Erzeugen einer grafischen Darstellung des Objektes ausgehend vom festgelegten Befehl und den festgelegten Parametern auf einem Bildschirm;
gekennzeichnet durch
das Festlegen einer Funktionsschaltfläche, die auf dem Bildschirm mit einer grafischen Darstellung angezeigt wird, die sich von der grafischen Darstellung des Objektes unterscheidet;
das Auswählen des auf dem Bildschirm angezeigten Objektes und das Zuordnen des ausgewählten Objektes zur Funktionsschaltfläche;
das Kopieren des festgelegten Befehls und der festgelegten Parameter des Objektes in die zugeordnete Funktionsschaltfläche, wobei eine nachfolgende Auswahl der Funktionsschaltfläche die Ausführung des festgelegten Befehls gemäß den festgelegten Parametern bewirkt.

2. Verfahren nach Anspruch 1, wobei die in die Funktionsschaltfläche gestellten Parameter durch die Festlegung anderer auf dem Bildschirm angezeigter Parameter geändert werden können, so dass die anderen Parameter der Funktionsschaltfläche zugeordnet werden.

3. Verfahren nach Anspruch 1 oder 2, wobei mindestens ein vorher festgelegter Parameter der Parameter des Objektes in die Funktionsschaltfläche gestellt wird.

4. Verfahren nach Anspruch 3, wobei der Parameter, der in die Funktionsschaltfläche gestellt wird, vom Benutzer gesetzt werden kann.

5. Verfahren nach den Ansprüchen 1, 2, 3 oder 4, wobei die Funktionsschaltfläche vor dem Kopieren des festgelegten Befehls in einer ersten Form und nach dem Kopieren in einer zweiten Form angezeigt wird.

6. Editiersystem zum selektiven Setzen einer Funktionsschaltfläche einer grafischen Benutzeroberfläche (GUI) zum Ausführen eines Objektbefehls, das folgendes umfasst:
Mittel zum Festlegen eines Objektbefehls für ein Objekt und zum Festlegen von Parametern des Objektes;
Mittel zum Erzeugen einer grafischen Darstellung des Objektes ausgehend vom festgelegten Befehl und den festgelegten Parametern auf einem Bildschirm;
gekennzeichnet durch
Mittel zum Festlegen einer Funktionsschaltfläche, die auf dem Bildschirm mit einer grafischen Darstellung angezeigt wird, die sich von der grafischen Darstellung des Objektes unterscheidet;
Mittel zum Auswählen des auf dem Bildschirm angezeigten Objektes und zum Zuordnen des ausgewählten Objektes zur Funktionsschaltfläche;
Mittel zum Kopieren des festgelegten Befehls und der festgelegten Parameter des Objektes in die zugeordnete Funktionsschaltfläche, wobei eine nachfolgende Auswahl der Funktionsschaltfläche die Ausführung des festgelegten Befehls gemäß den festgelegten Parametern bewirkt.

7. Editiersystem nach Anspruch 6, das außerdem Mittel zum Ändern der in die Funktionsschaltfläche gestellten Parameter durch die Festlegung anderer auf dem Bildschirm angezeigter Parameter umfasst, so dass die anderen Parameter der Funktionsschaltfläche zugeordnet werden.

8. Editiersystem nach Anspruch 6 oder 7, wobei mindestens ein vorher festgelegter Parameter der Parameter des Objektes in die Funktionsschaltfläche gestellt wird.

9. Editiersystem nach Anspruch 8, wobei der in die Funktionsschaltfläche gestellte Parameter vom Benutzer gesetzt werden kann.

10. Editiersystem nach den Anspruch 6, 7, 8 oder 9, das außerdem Mittel zum Anzeigen der Funktionsschaltfläche in einer ersten Form vor dem Kopieren des festgelegten Befehls und Mittel zum Anzeigen in einer zweiten Form nach dem Kopieren umfasst.

## Revendications

1. Un procédé de fixation sélective d'un bouton d'outil d'interface graphique utilisateur GUI, destiné à exécuter une instruction objet, comprenant les étapes consistant à :
spécifier une instruction objet pour un objet et spécifier des paramètres dudit objet;
générer sur un écran d'affichage une représentation graphique de l'objet, basée sur ladite instruction spécifiée et lesdits paramètres spécifiés;
caractérisé par
le fait de spécifier un bouton d'outil, affiché sur ledit écran d'affichage, avec une représentation graphique rendue distincte de la représentation graphique dudit objet;
le fait de sélectionner ledit objet affiché sur ledit écran d'affichage et concernant l'objet sélectionné sur ledit bouton d'outil;
le fait de copier l'instruction spécifiée et les paramètres spécifiés dudit objet sur le bouton d'outil concerné, de manière qu'une sélection subséquente du bouton d'outil provoque l'exécution de l'instruction spécifiée selon lesdits paramètres spécifiés.

2. Le procédé selon la revendication 1, dans lequel lesdits paramètres fixés dans ledit bouton d'outil peuvent être modifiés en spécifiant d'autres paramètres affichés sur ledit écran d'affichage, de manière que lesdits autres paramètres soient liés audit bouton d'outil.

3. Le procédé selon la revendication 1 ou 2, dans lequel au moins un paramètre prédéterminé desdits paramètres que ledit objet comporte est fixé sur ledit bouton d'outil.

4. Le procédé selon la revendication 3, dans lequel ledit paramètre qui est fixé audit bouton d'outil peut être fixé par l'utilisateur.

5. Le procédé selon les revendications 1, 2, 3 ou 4, de manière à afficher ledit bouton d'outil sous une première forme, avant de copier l'instruction spécifique, et sous une deuxième forme, après qu'elle ait été copiée ainsi.

6. Un système d'édition permettant de fixer sélectivement un bouton d'outil d'interface graphique utilisateur GUI pour exécuter une instruction objet, comprenant :
des moyens pour spécifier une instruction objet pour un objet et spécifier des paramètres dudit objet;
des moyens pour générer sur un écran d'affichage une représentation graphique de l'objet en se basant sur ladite instruction spécifiée et lesdits paramètres spécifiés,
caractérisé par
des moyens pour spécifier un bouton d'outil affiché sur ledit écran d'affichage, avec une représentation graphique rendue distincte de la représentation graphique dudit objet;
des moyens pour sélectionner ledit objet affiché sur ledit écran d'affichage et concernant ledit objet sélectionné sur ledit bouton d'outil;
des moyens pour copier l'instruction spécifiée et les paramètres spécifiés dudit objet sur ledit bouton d'outil concerné, de manière qu'une sélection subséquente du bouton d'outil provoque l'exécution de l'instruction spécifiée selon lesdits paramètres spécifiés.

7. Le système d'édition selon la revendication 6, comprenant en outre des moyens pour modifier lesdits paramètres fixés dans ledit bouton d'outil en spécifiant d'autres paramètres affichés sur ledit écran d'affichage, de manière que lesdits autres paramètres soient liés audit bouton d'outil.

8. Le système d'édition selon la revendication 6 ou 7, dans lequel au moins un paramètre prédéterminé desdits paramètres que ledit objet comporte est fixé sur ledit bouton d'outil.

9. Le système d'édition selon la revendication 8, dans lequel ledit paramètre qui est fixé sur le bouton d'outil peut être fixé par l'utilisateur.

10. Le système d'édition selon les revendications 6, 7, 8, ou 9, comprenant des moyens pour afficher ledit bouton d'outil sous une première forme, avant de copier l'instruction spécifiée, et des moyens pour l'afficher sous une deuxième forme, après qu'il ait été copié ainsi.
